(19)

Europäisches Patentamt

European Patent Office

Office européen des brevets

(11) **EP 4 236 571 A1**

(12) **EUROPEAN PATENT APPLICATION**

(43) Date of publication:
**30.08.2023  Bulletin 2023/35**

(21) Application number: **23158179.4**

(22) Date of filing: **23.02.2023**

(51) International Patent Classification (IPC):
**H04W 72/231** (2023.01)

(52) Cooperative Patent Classification (CPC):
**H04W 72/231; H04L 5/0053; H04L 5/0094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.02.2022  US 202263313042 P**

(71) Applicant: **INTEL Corporation
Santa Clara, CA 95054 (US)**

(72) Inventors:
• **LI, Yingyang
  Beijing, 100032 (CN)**
• **CHATTERJEE, Debdeep
  San Jose, CA 95128 (US)**
• **XIONG, Gang
  Portland, OR 97229 (US)**

(74) Representative: **Viering, Jentschura & Partner
mbB
Patent- und Rechtsanwälte
Am Brauhaus 8
01099 Dresden (DE)**

(54) **CONFIGURING COMMON PHYSICAL UPLINK CONTROL CHANNEL (PUCCH) RESOURCE(S)
FOR A USER EQUIPMENT (UE) WITH REDUCED BANDWIDTH**

(57)    A method and device for wireless communication to allocate common Physical Uplink Control Channel (PUCCH) resources for a user equipment (UE) (502) with reduced bandwidth comprising receiving, by the UE, a high layer configuration on parameters to determine a set of common PUCCH resources; decoding, by the UE, Downlink Control Information (DCI) from a Physical Downlink Control Channel (PDCCH); and determining an indicated PUCCH resource in the set of PUCCH resources when frequency hopping is disabled by higher layers for the PUCCH transmission.

FIG. 3

**Description**

**CROSS-REFERENCE TO RELATED APPLICATIONS**

This application claims priority to US Provisional Application 63/313,042, which was filed on February 23, 2022, the entire contents of which are hereby incorporated herein by reference.

**BACKGROUND**

Various embodiments generally may relate to the field of wireless communications.

The fifth generation (5G) new radio (NR) specifications cater to support of a diverse set of verticals and use cases, including enhanced mobile broadband (eMBB) as well as the newly introduced ultra-reliable low-latency communication (URLLC) services. Support for Low Power Wide Area (LPWA) networks and use cases for extremely low complexity/cost devices, targeting extreme coverage and ultra-long battery lifetimes, may be served by machine type communication (MTC) (e.g., Category M user equipment (UEs)) and narrowband (NB)-internet of things (IoT) (e.g., Category NB UEs) technologies.

It may be beneficial to support a class of NR UEs with complexity and power consumption levels lower than legacy third generation partnership project (3GPP) release-15 (Rel-15) NR UEs, catering to use cases like industrial wireless sensor networks (IWSN), certain classes of wearables, and video surveillance, to fill the gap between current LPWA solutions and eMBB solutions in NR and also to further facilitate a smooth migration from 3.5 generation (3.5G) and fourth generation (4G) technologies to 5G/NR technology for currently deployed bands serving relevant use cases that require relatively low-to-moderate reference (e.g., median) and peak user throughputs, low device complexity, small device form factors, and relatively long battery lifetimes.

Towards the above, a class of Reduced Capability (RedCap) NR UEs may be defined that can be served using the currently specified 5G NR framework with necessary adaptations and enhancements to limit device complexity and power consumption while minimizing any adverse impact to network resource utilization, system spectral efficiency, and operation efficiency.

**BRIEF DESCRIPTION OF THE FIGURES**

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:

FIG. 1 depicts an allocation of common PUCCHs for RedCap UEs;
FIG. 2 depicts common PUCCH resources for a RedCap UE;
FIG. 3 depicts an allocation of two sets of orthogonal PUCCH resources by different offsets;
FIG. 4 depicts a network in accordance with various embodiments;
FIG. 5 depicts a wireless network in accordance with various embodiments;
FIG. 6 is a block diagram illustrating components able to read instructions from a machine-readable or computer-readable medium and perform any one or more of the methodologies discussed herein; and
FIG. 7 is a process as disclosed herein, as performed by an electronic device, a network system, a chip, a component, or portions or implementations thereof.

**DETAILED DESCRIPTION**

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

In Rel-15 NR, for initial access, a physical uplink control channel (PUCCH) resource set, which consists of 256 PUCCH resources, is predefined in the specification. Further, a 4-bit field (pucch-ResourceCommon) in NR remaining minimum system information (RMSI) is used to indicate 16 cell-specific PUCCH resources. In addition, in order to exploit the benefit of frequency diversity, intra-slot frequency hopping is employed where PUCCH is hopped between two edges of the initial uplink (UL) bandwidth part (BWP).

Given that maximum bandwidth for RedCap UEs is reduced, when RedCap UEs and non-RedCap UEs coexist in a network, it may be more appropriate to disable intra-slot frequency hopping, which may help avoid resource fragmentation for the uplink transmission. In this case, certain mechanisms may be used to configure common PUCCH resource for UE with reduced bandwidth. Embodiments herein relate to various options to configure common PUCCH resource for UE with reduced bandwidth.

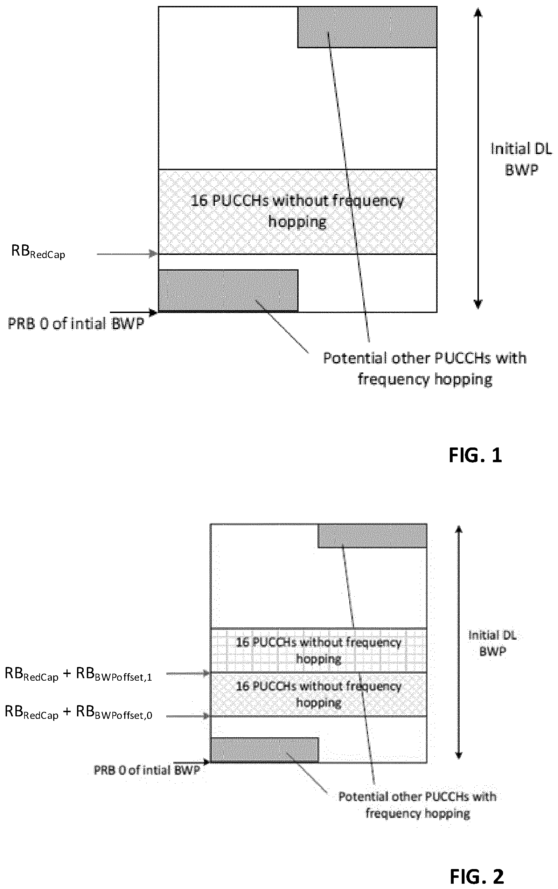

For a RedCap UE with reduced bandwidth, PUCCH resources without frequency hopping may be configured, which may mitigate the problem of fragmentation of the UL carrier bandwidth. Further, for the allocation of common PUCCH resource for RedCap UE before RRC connection, a physical resource block (PRB) offset, i.e. $RB_{\text{Redcap}}$, may be considered to avoid interference between the common PUCCH resources and a common PUCCH resource for legacy NR UE. FIG. 1 depicts common PUCCH resources for RedCap UEs and illustrates an example for the allocation of common PUCCHs for RedCap UEs. Preferably, since existing NR supports the configuration of 16 common PUCCH resources by SIB1, 16 common PUCCH resources may be configured for the RedCap UE.

The common PUCCH resource configuration for the RedCap UE may reuse most designs of common PUCCH resource configuration in NR. Specifically, the configuration on PUCCH format, first symbol, number of symbols and cyclic shift (CS) within a PRB in "Table 9.2.1-1: PUCCH resource sets before dedicated PUCCH resource configuration" in the 3GPP technical specification (TS) 38.213 may be reused. On the other hand, to generate multiple sets of common PUCCH resources using frequency domain multiplexing which can be used by different adjacent cells to avoid inter-cell interference, the parameter of PRB offset RBBwP in the Table 9.2.1-1 can be referred to generate the multiple set of common PUCCH resources.

**In one embodiment,** a PRB offset $2 \cdot RB_{\text{BWP}}^{\text{offset}}$ determined for a row in Table 9.2.1-1 and the offset $RB_{\text{Redcap}}$ may be used to determine the starting PRB of a set of common PUCCH resource. The 16 PUCCH resources in one set which is associated with a row of Table 9.2.1-1 in RAN4 Specification ETSI TS38.133 v 17 are allocated in consecutive PRBs starting from PRB index $RB_{\text{Redcap}} + 2 \cdot RB_{\text{BWP}}^{\text{offset}}$. The gNB may configure a proper $RB_{\text{Redcap}} + 2 \cdot RB_{\text{BWP}}^{\text{offset}}$ so that common PUCCH resources for RedCap UEs do not overlap with common PUCCH resources for non-RedCap UEs. With this scheme, for the multiple rows with different $RB_{\text{BWP}}^{\text{offset}}$, the multiple associated sets of PUCCH resources can occupy non-overlapped PRBs, i.e., orthogonal multiplexing by FDM. For row 15, the value $RB_{\text{BWP}}^{\text{offset}} = \lfloor N_{\text{BWP}}^{\text{size}}/4 \rfloor$ may be scaled by 2 too, or it can be kept unchanged. With this scheme, the value range of $RB_{\text{Redcap}}$ may be a subset of {0,2,3,4,6}. gNB may choose a proper $RB_{\text{Redcap}}$ so that common PUCCH resources for RedCap UE do not overlap with common PUCCH resources for non-RedCap UEs.

In one option, the same number of PUCCH resources are configured in all PRBs except the last PRB on which a set of common PUCCH resources are configured. The number of PUCCH resource in the last PRB may be less than the other PRBs. If UE is indicated with a lower part of BWP for PUCCH resource, the UE determines the PRB index of the PUCCH transmission as $RB_{\text{Redcap}} + 2 \cdot RB_{\text{BWP}}^{\text{offset}} + \lfloor r_{\text{PUCCH}}/N_{\text{CS}} \rfloor$. Otherwise, the UE determines the PRB index of the PUCCH transmission as $N_{\text{BWP}}^{\text{size}} - 1 - RB_{\text{Redcap}} - 2 \cdot RB_{\text{BWP}}^{\text{offset}} - \lfloor r_{\text{PUCCH}}/N_{\text{CS}} \rfloor$. The UE determines the initial cyclic shift index in the set of initial cyclic shift indexes as $r_{\text{PUCCH}} \bmod N_{\text{CS}}$.

FIG. 2 illustrates common PUCCH resources for a RedCap UE and provides an example for the allocation of two sets of orthogonal PUCCH resources by offset $RB_{\text{Redcap}}$ and two different $RB_{\text{BWP}}^{\text{offset}}$. The first set of PUCCH resources can start from PRB index $RB_{\text{Redcap}} + 2 \cdot RB_{\text{BWP}}^{\text{offset},0}$, while the second set of PUCCHs can start from PRB index $RB_{\text{Redcap}} + 2 \cdot RB_{\text{BWP}}^{\text{offset},1}$.

In another option, the first 8 PUCCH resource may not be allocated in the same PRB with the last 8 PUCCH resources. For this, the number of PRBs of 8 common PUCCH resources may be denoted as $\Delta$. The cardinality of the set of CSs in the parameter 'Set of initial CS indexes' for a row in Table 9.2.1-1 may be denoted as $N_{PRB}^{CS}$, $\Delta = \lceil 8/N_{PRB}^{CS} \rceil$. The possible values for $\Delta$ according to Table 9.2.1-1 may include 2, 3 or 4. If the total number of CSs in $\Delta$ PRBs can be more than 8, this option has the benefit for load balancing of 16 PUCCH resources in $2\Delta$ PRBs, which is true for row 1 and 2 in Table 9.2.1-1. In this option, if UE is indicated with a lower part of BWP for PUCCH resource,

- If $\lfloor r_{PUCCH}/8 \rfloor = 0$, the UE determines the PRB index of the PUCCH transmission as $RB_{Redcap} + 2 \cdot RB_{BWP}^{offset} + \lfloor r_{PUCCH}/N_{CS} \rfloor$. The UE determines the initial cyclic shift index in the set of initial cyclic shift indexes as $r_{PUCCH} \bmod N_{CS}$.

- If $\lfloor r_{PUCCH}/8 \rfloor = 1$, the UE determines the PRB index of the PUCCH transmission as $RB_{Redcap} + 2 \cdot RB_{BWP}^{offset} + \Delta + \lfloor (r_{PUCCH} - 8)/N_{CS} \rfloor$. The UE determines the initial cyclic shift index in the set of initial cyclic shift indexes as $(r_{PUCCH} - 8) \bmod N_{CS}$.

Otherwise, if UE is indicated with a upper part of BWP for PUCCH resource,

- If $\lfloor r_{PUCCH}/8 \rfloor = 0$, the UE determines the PRB index of the PUCCH transmission as $N_{BWP}^{size} - 1 - RB_{Redcap} - 2 \cdot RB_{BWP}^{offset} - \lfloor r_{PUCCH}/N_{CS} \rfloor$. The UE determines the initial cyclic shift index in the set of initial cyclic shift indexes as $r_{PUCCH} \bmod N_{CS}$.

- If $\lfloor r_{PUCCH}/8 \rfloor = 1$, the UE determines the PRB index of the PUCCH transmission as $N_{BWP}^{size} - 1 - RB_{Redcap} - 2 \cdot RB_{BWP}^{offset} - \Delta - \lfloor (r_{PUCCH} - 8)/N_{CS} \rfloor$. The UE determines the initial cyclic shift index in the set of initial cyclic shift indexes as $(r_{PUCCH} - 8) \bmod N_{CS}$.

In another option, instead of scaling $RB_{BWP}^{offset}$ by 2 in the formula that determines a common PUCCH resource, an alternative way is to update the Table 9.2.1-1 by scaling the parameter of PRB offset $RB_{BWP}^{offset}$ by 2. The updated Table 9.2.1-1 is provided as below. For row 15, the value $RB_{BWP}^{offset} = \lfloor N_{BWP}^{size}/4 \rfloor$ may be scaled by 2 too, or it can be kept unchanged. The 16 PUCCH resources in one set which is associated with a row of Table 9.2.1-1 are allocated in consecutive PRBs starting from PRB index $RB_{Redcap} + RB_{BWP}^{offset}$.

**3GPP TS 38.213, EXAMPLE REVISED Table 9.2.1-1**

| Index | PUCCH format | First symbol | Number of symbols | PRB offset $RB_{BWP}^{offset}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3x2=6 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2x2=4 | {0, 3, 6, 9} |
| 6 | 1 | 10 | 4 | 4x2=8 | {0, 3, 6, 9} |
| 7 | 1 | 4 | 10 | 0 | {0, 6} |

(continued)

| Index | PUCCH format | First symbol | Number of symbols | PRB offset $RB_{\mathrm{BWP}}^{\mathrm{offset}}$ | Set of initial CS indexes |
|-------|--------------|--------------|-------------------|-------------------------------------------------|---------------------------|
| 8 | 1 | 4 | 10 | 0 | {0, 3, 6, 9} |
| 9 | 1 | 4 | 10 | 2x2=4 | {0, 3, 6, 9} |
| 10 | 1 | 4 | 10 | 4x2=8 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2x2=4 | {0, 3, 6, 9} |
| 14 | 1 | 0 | 14 | 4x2=8 | {0, 3, 6, 9} |
| 15 | 1 | 0 | 14 | $\lfloor N_{\mathrm{BWP}}^{\mathrm{size}}/4 \rfloor$ | {0, 3, 6, 9} |

In another embodiment, the PRB offset $RB_{\mathrm{BWP}}^{\mathrm{offset}}$ of a row in Table 9.2.1-1 and the offset $RB_{\mathrm{Redcap}}$ are used to determine the starting PRB of a set of common PUCCH resources. The 16 PUCCH resources in one set which is associated with a row of Table 9.2.1-1 are allocated in consecutive PRBs starting from PRB index $RB_{\mathrm{Redcap}} + RB_{\mathrm{BWP}}^{\mathrm{offset}}$. The gNB may configure a proper $RB_{\mathrm{Redcap}} + RB_{\mathrm{BWP}}^{\mathrm{offset}}$ so that common PUCCH resources for RedCap UE do not overlap with common PUCCH resources for non-RedCap UEs. With this scheme, to generate multiple sets of orthogonal common PUCCH resource with FDM multiplexing for RedCap UEs, the gNB may need to configure a different value of $RB_{\mathrm{Redcap}}$ and/or $RB_{\mathrm{BWP}}^{\mathrm{offset}}$. For row 15, the value $RB_{\mathrm{BWP}}^{\mathrm{offset}} = \lfloor N_{\mathrm{BWP}}^{\mathrm{size}}/4 \rfloor$ may be scaled by 2 too, or it can be kept unchanged. With this scheme, the value range of $RB_{\mathrm{Redcap}}$ may be a subset of {0,4, 8, 12}. The gNB may choose a proper $RB_{\mathrm{Redcap}}$ so that common PUCCH resources for RedCap UEs do not overlap with common PUCCH resources for non-RedCap UEs.

In one option, the same number of PUCCH resources are configured in all PRBs except the last PRB on which a set of common PUCCH resources are configured. The number of PUCCH resources in the last PRB may be less than the other PRBs. If the UE is indicated with a lower part of BWP for the PUCCH resource, the UE determines the PRB index of the PUCCH transmission as $RB_{\mathrm{Redcap}} + RB_{\mathrm{BWP}}^{\mathrm{offset}} + \lfloor r_{\mathrm{PUCCH}}/N_{\mathrm{CS}} \rfloor$. Otherwise, the UE determines the PRB index of the PUCCH transmission as $N_{\mathrm{BWP}}^{\mathrm{size}} - 1 - RB_{\mathrm{Redcap}} - RB_{\mathrm{BWP}}^{\mathrm{offset}} - \lfloor r_{\mathrm{PUCCH}}/N_{\mathrm{CS}} \rfloor$. The UE determines the initial cyclic shift index in the set of initial cyclic shift indexes as $r_{\mathrm{PUCCH}} \bmod N_{\mathrm{CS}}$.

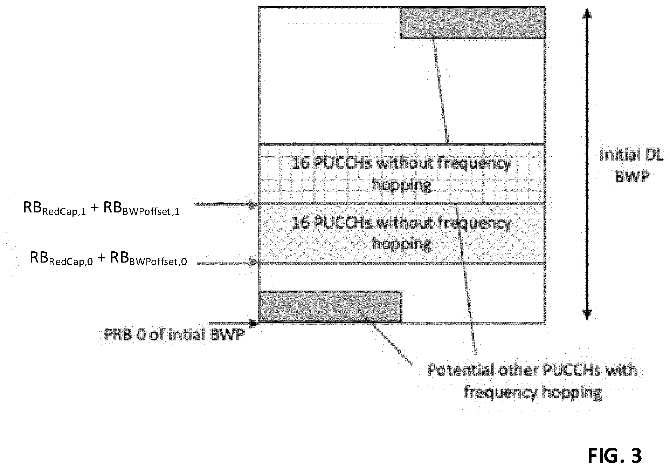

FIG. 3 depicts common PUCCH resources for a RedCap UE and illustrates an example for the allocation of two sets of orthogonal PUCCH resources by different $RB_{\mathrm{Redcap}}$ and $RB_{\mathrm{BWP}}^{\mathrm{offset}}$. The first set of PUCCH resources can start from PRB index $RB_{\mathrm{Redcap},0} + RB_{\mathrm{BWP}}^{\mathrm{offset},0}$, while the second set of PUCCHs can start from PRB index $RB_{\mathrm{Redcap},1} + RB_{\mathrm{BWP}}^{\mathrm{offset},1}$.

In another option, the first 8 PUCCH resource may not be allocated in the same PRB with the last 8 PUCCH resources. Denote the number of PRBs of 8 common PUCCH resources as $\Delta$. The cardinality of the set of CSs in the parameter 'Set of initial CS indexes' for a row in Table 9.2.1-1 may be denoted as $N_{\mathrm{PRB}}^{\mathrm{CS}}$, $\Delta = \lceil 8/N_{\mathrm{PRB}}^{\mathrm{CS}} \rceil$. The possible values for $\Delta$ according to Table 9.2.1-1 include 2, 3 or 4. If the total number of CSs in $\Delta$ PRBs can be more than 8, this option has the benefit for load balancing of 16 PUCCH resources in $2\Delta$ PRBs, which is true for row 1 and 2 in Table 9.2.1-1. In this option, if the UE is indicated with a lower part of BWP for PUCCH resource,

- If $\lfloor r_{\mathrm{PUCCH}}/8 \rfloor = 0$ , the UE determines the PRB index of the PUCCH transmission as $RB_{\mathrm{Redcap}} + RB_{\mathrm{BWP}}^{\mathrm{offset}} + \lfloor r_{\mathrm{PUCCH}}/N_{\mathrm{CS}} \rfloor$ . The UE determines the initial cyclic shift index in the set of initial cyclic shift indexes as $r_{\mathrm{PUCCH}} \mathrm{mod} N_{\mathrm{CS}}$.

- If $\lfloor r_{\mathrm{PUCCH}}/8 \rfloor = 1$ , the UE determines the PRB index of the PUCCH transmission as $RB_{\mathrm{Redcap}} + RB_{\mathrm{BWP}}^{\mathrm{offset}} + \Delta + \lfloor (r_{\mathrm{PUCCH}} - 8)/N_{\mathrm{CS}} \rfloor$ . The UE determines the initial cyclic shift index in the set of initial cyclic shift indexes as $(r_{\mathrm{PUCCH}} - 8) \mathrm{mod} N_{\mathrm{CS}}$.

Otherwise, if the UE is indicated with a upper part of BWP for PUCCH resource,

- If $\lfloor r_{\mathrm{PUCCH}}/8 \rfloor = 0$ , the UE determines the PRB index of the PUCCH transmission as $N_{\mathrm{BWP}}^{\mathrm{size}} - 1 - RB_{\mathrm{Redcap}} - RB_{\mathrm{BWP}}^{\mathrm{offset}} - \lfloor r_{\mathrm{PUCCH}}/N_{\mathrm{CS}} \rfloor$ . The UE determines the initial cyclic shift index in the set of initial cyclic shift indexes as $r_{\mathrm{PUCCH}} \mathrm{mod} N_{\mathrm{CS}}$.

- If $\lfloor r_{\mathrm{PUCCH}}/8 \rfloor = 1$ , the UE determines the PRB index of the PUCCH transmission as $N_{\mathrm{BWP}}^{\mathrm{size}} - 1 - RB_{\mathrm{Redcap}} - RB_{\mathrm{BWP}}^{\mathrm{offset}} - \Delta - \lfloor (r_{\mathrm{PUCCH}} - 8)/N_{\mathrm{CS}} \rfloor$ . The UE determines the initial cyclic shift index in the set of initial cyclic shift indexes as $(r_{\mathrm{PUCCH}} - 8) \mathrm{mod} N_{\mathrm{CS}}$.

In another embodiment, if the UE is indicated with a lower part of BWP for the PUCCH resource, the UE determines the PRB index of the PUCCH transmission as $RB_{\mathrm{Redcap}} + \lfloor r_{\mathrm{PUCCH}}/N_{\mathrm{CS}} \rfloor$ . Otherwise, the UE determines the PRB index of the PUCCH transmission as $N_{\mathrm{BWP}}^{\mathrm{size}} - 1 - RB_{\mathrm{Redcap}} - \lfloor r_{\mathrm{PUCCH}}/N_{\mathrm{CS}} \rfloor$ . The UE determines the initial cyclic shift index in the set of initial cyclic shift indexes as $r_{\mathrm{PUCCH}} \mathrm{mod} N_{\mathrm{CS}}$. In this case, $RB_{\mathrm{BWP}}^{\mathrm{offset}}$ is not used for PUCCH resource for RedCap UEs.

In another option, if the UE is indicated with a lower part of BWP for PUCCH resource,

- If $\lfloor r_{\mathrm{PUCCH}}/8 \rfloor = 0$ , the UE determines the PRB index of the PUCCH transmission as $RB_{\mathrm{Redcap}} + \lfloor r_{\mathrm{PUCCH}}/N_{\mathrm{CS}} \rfloor$ . The UE determines the initial cyclic shift index in the set of initial cyclic shift indexes as $r_{\mathrm{PUCCH}} \mathrm{mod} N_{\mathrm{CS}}$.

- If $\lfloor r_{\mathrm{PUCCH}}/8 \rfloor = 1$ , the UE determines the PRB index of the PUCCH transmission as $RB_{\mathrm{Redcap}} + \Delta + \lfloor (r_{\mathrm{PUCCH}} - 8)/N_{\mathrm{CS}} \rfloor$ . The UE determines the initial cyclic shift index in the set of initial cyclic shift indexes as $(r_{\mathrm{PUCCH}} - 8) \mathrm{mod} N_{\mathrm{CS}}$.

Otherwise, if the UE is indicated with an upper part of BWP for PUCCH resource,

- If $\lfloor r_{\mathrm{PUCCH}}/8 \rfloor = 0$ , the UE determines the PRB index of the PUCCH transmission as $N_{\mathrm{BWP}}^{\mathrm{size}} - 1 - RB_{\mathrm{Redcap}} - \lfloor r_{\mathrm{PUCCH}}/N_{\mathrm{CS}} \rfloor$ . The UE determines the initial cyclic shift index in the set of initial cyclic shift indexes as $r_{\mathrm{PUCCH}} \mathrm{mod} N_{\mathrm{CS}}$.

- If $\lfloor r_{\mathrm{PUCCH}}/8 \rfloor = 1$ , the UE determines the PRB index of the PUCCH transmission as $N_{\mathrm{BWP}}^{\mathrm{size}} - 1 - RB_{\mathrm{Redcap}} - \Delta - \lfloor (r_{\mathrm{PUCCH}} - 8)/N_{\mathrm{CS}} \rfloor$ . The UE determines the initial cyclic shift index in the set of initial cyclic shift indexes as $(r_{\mathrm{PUCCH}} - 8) \mathrm{mod} N_{\mathrm{CS}}$.

SYSTEMS AND IMPLEMENTATIONS

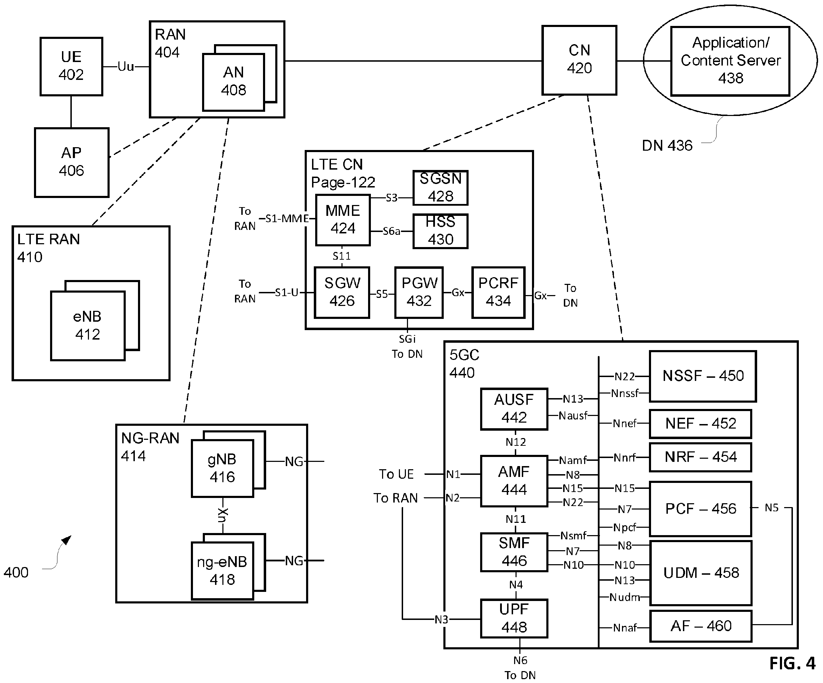

FIGs 4-6 illustrate various systems, devices, and components that may implement aspects of disclosed embodiments.

FIG. 4 illustrates a network 400 in accordance with various embodiments. The network 400 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 400 may include a UE 402, which may include any mobile or non-mobile computing device designed to communicate with a RAN 404 via an over-the-air connection. The UE 402 may be communicatively coupled with the RAN 404 by a Uu interface. The UE 402 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 400 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 402 may additionally communicate with an AP 406 via an over-the-air connection. The AP 406 may manage a WLAN connection, which may serve to offload some/all network traffic from the RAN 404. The connection between the UE 402 and the AP 406 may be consistent with any IEEE 802.11 protocol, wherein the AP 406 could be a wireless fidelity (Wi-Fi®) router. In some embodiments, the UE 402, RAN 404, and AP 406 may utilize cellular-WLAN aggregation (for example, LWA/LWIP). Cellular-WLAN aggregation may involve the UE 402 being configured by the RAN 404 to utilize both cellular radio resources and WLAN resources.

The RAN 404 may include one or more access nodes, for example, AN 408. AN 408 may terminate air-interface protocols for the UE 402 by providing access stratum protocols including RRC, PDCP, RLC, MAC, and L1 protocols. In this manner, the AN 408 may enable data/voice connectivity between CN 420 and the UE 402. In some embodiments, the AN 408 may be implemented in a discrete device or as one or more software entities running on server computers as part of, for example, a virtual network, which may be referred to as a CRAN or virtual baseband unit pool. The AN 408 be referred to as a BS, gNB, RAN node, eNB, ng-eNB, NodeB, RSU, TRxP, TRP, etc. The AN 408 may be a macrocell base station or a low power base station for providing femtocells, picocells or other like cells having smaller coverage areas, smaller user capacity, or higher bandwidth compared to macrocells.

In embodiments in which the RAN 404 includes a plurality of ANs, they may be coupled with one another via an X2 interface (if the RAN 404 is an LTE RAN) or an Xn interface (if the RAN 404 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 404 may each manage one or more cells, cell groups, component carriers, etc. to provide the UE 402 with an air interface for network access. The UE 402 may be simultaneously connected with a plurality of cells provided by the same or different ANs of the RAN 404. For example, the UE 402 and RAN 404 may use carrier aggregation to allow the UE 402 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 404 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 402 or AN 408 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 404 may be an LTE RAN 410 with eNBs, for example, eNB 412. The LTE RAN 410 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 404 may be an NG-RAN 414 with gNBs, for example, gNB 416, or ng-eNBs, for example, ng-eNB 418. The gNB 416 may connect with SG-enabled UEs using a 5G NR interface. The gNB 416 may connect with a 5G core through an NG interface, which may include an N2 interface or an N3 interface. The ng-eNB 418 may also connect with the 5G core through an NG interface, but may connect with a UE via an LTE air interface. The gNB 416 and the ng-eNB 418 may connect with each other over an Xn interface.

In some embodiments, the NG interface may be split into two parts, an NG user plane (NG-U) interface, which carries traffic data between the nodes of the NG-RAN 414 and a UPF 448 (e.g., N3 interface), and an NG control plane (NG-C) interface, which is a signaling interface between the nodes of the NG-RAN 414 and an AMF 444 (e.g., N2 interface).

The NG-RAN 414 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 402 can be configured with multiple BWPs where each BWP configuration has a different SCS. When a BWP change is indicated to the UE 402, the SCS of the transmission is changed as well. Another use case example of BWP is related to power saving. In particular, multiple BWPs can be configured for the UE 402 with different amount of frequency resources (for example, PRBs) to support data transmission under different traffic loading scenarios. A BWP containing a smaller number of PRBs can be used for data transmission with small traffic load while allowing power saving at the UE 402 and in some cases at the gNB 416. A BWP containing a larger number of PRBs can be used for scenarios with higher traffic load.

The RAN 404 is communicatively coupled to CN 420 that includes network elements to provide various functions to support data and telecommunications services to customers/subscribers (for example, users of UE 402). The components of the CN 420 may be implemented in one physical node or separate physical nodes. In some embodiments, NFV may be utilized to virtualize any or all of the functions provided by the network elements of the CN 420 onto physical compute/storage resources in servers, switches, etc. A logical instantiation of the CN 420 may be referred to as a network slice, and a logical instantiation of a portion of the CN 420 may be referred to as a network sub-slice.

In some embodiments, the CN 420 may be an LTE CN 422, which may also be referred to as an EPC. The LTE CN 422 may include MME 424, SGW 426, SGSN 428, HSS 430, PGW 432, and PCRF 434 coupled with one another over interfaces (or "reference points") as shown. Functions of the elements of the LTE CN 422 may be briefly introduced as follows.

The MME 424 may implement mobility management functions to track a current location of the UE 402 to facilitate paging, bearer activation/deactivation, handovers, gateway selection, authentication, etc.

The SGW 426 may terminate an S1 interface toward the RAN and route data packets between the RAN and the LTE CN 422. The SGW 426 may be a local mobility anchor point for inter-RAN node handovers and also may provide an anchor for inter-3GPP mobility. Other responsibilities may include lawful intercept, charging, and some policy enforcement.

The SGSN 428 may track a location of the UE 402 and perform security functions and access control. In addition, the SGSN 428 may perform inter-EPC node signaling for mobility between different RAT networks; PDN and S-GW selection as specified by MME 424; MME selection for handovers; etc. The S3 reference point between the MME 424 and the SGSN 428 may enable user and bearer information exchange for inter-3GPP access network mobility in idle/active states.

The HSS 430 may include a database for network users, including subscription-related information to support the network entities' handling of communication sessions. The HSS 430 can provide support for routing/roaming, authentication, authorization, naming/addressing resolution, location dependencies, etc. An S6a reference point between the HSS 430 and the MME 424 may enable transfer of subscription and authentication data for authenticating/authorizing user access to the LTE CN 420.

The PGW 432 may terminate an SGi interface toward a data network (DN) 436 that may include an application/content server 438. The PGW 432 may route data packets between the LTE CN 422 and the data network 436.

The PGW 432 may be coupled with the SGW 426 by an S5 reference point to facilitate user plane tunneling and tunnel management. The PGW 432 may further include a node for policy enforcement and charging data collection (for example, PCEF). Additionally, the SGi reference point between the PGW 432 and the data network 436 may be an operator external public, a private PDN, or an intra-operator packet data network, for example, for provision of IMS services. The PGW 432 may be coupled with a PCRF 434 via a Gx reference point.

The PCRF 434 is the policy and charging control element of the LTE CN 422. The PCRF 434 may be communicatively coupled to the app/content server 438 to determine appropriate QoS and charging parameters for service flows. The PCRF 432 may provision associated rules into a PCEF (via Gx reference point) with appropriate TFT and QCI.

In some embodiments, the CN 420 may be a SGC 440. The SGC 440 may include an AUSF 442, AMF 444, SMF 446, UPF 448, NSSF 450, NEF 452, NRF 454, PCF 456, UDM 458, and AF 460 coupled with one another over interfaces (or "reference points") as shown. Functions of the elements of the SGC 440 may be briefly introduced as follows.

The AUSF 442 may store data for authentication of UE 402 and handle authenticationrelated functionality. The AUSF 442 may facilitate a common authentication framework for various access types. In addition to communicating with other elements of the SGC 440 over reference points as shown, the AUSF 442 may exhibit an Nausf service-based interface.

The AMF 444 may allow other functions of the SGC 440 to communicate with the UE 402 and the RAN 404 and to subscribe to notifications about mobility events with respect to the UE 402. The AMF 444 may be responsible for registration management (for example, for registering UE 402), connection management, reachability management, mobility management, lawful interception of AMF-related events, and access authentication and authorization. The AMF 444 may provide transport for SM messages between the UE 402 and the SMF 446, and act as a transparent proxy for routing SM messages. AMF 444 may also provide transport for SMS messages between UE 402 and an SMSF. AMF 444 may interact with the AUSF 442 and the UE 402 to perform various security anchor and context management functions. Furthermore, AMF 444 may be a termination point of a RAN CP interface, which may include or be an N2 reference point between the RAN 404 and the AMF 444; and the AMF 444 may be a termination point of NAS (N1) signaling, and perform NAS ciphering and integrity protection. AMF 444 may also support NAS signaling with the UE 402 over an N3 IWF interface.

The SMF 446 may be responsible for SM (for example, session establishment, tunnel management between UPF 448 and AN 408); UE IP address allocation and management (including optional authorization); selection and control of UP function; configuring traffic steering at UPF 448 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 444 over N2 to AN 408; and determining SSC mode of a session. SM may refer to management of a PDU session, and a PDU session or "session" may refer to a PDU connectivity service that provides or enables the exchange of PDUs between the UE 402 and the data network 436.

The UPF 448 may act as an anchor point for intra-RAT and inter-RAT mobility, an external PDU session point of interconnect to data network 436, and a branching point to support multihomed PDU session. The UPF 448 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 448 may include an uplink classifier to support routing traffic flows to a data network.

The NSSF 450 may select a set of network slice instances serving the UE 402. The NSSF 450 may also determine allowed NSSAI and the mapping to the subscribed S-NSSAIs, if needed. The NSSF 450 may also determine the AMF set to be used to serve the UE 402, or a list of candidate AMFs based on a suitable configuration and possibly by querying the NRF 454. The selection of a set of network slice instances for the UE 402 may be triggered by the AMF 444 with which the UE 402 is registered by interacting with the NSSF 450, which may lead to a change of AMF. The NSSF 450 may interact with the AMF 444 via an N22 reference point; and may communicate with another NSSF in a visited network via an N31 reference point (not shown). Additionally, the NSSF 450 may exhibit an Nnssf service-based interface.

The NEF 452 may securely expose services and capabilities provided by 3GPP network functions for third party, internal exposure/re-exposure, AFs (e.g., AF 460), edge computing or fog computing systems, etc. In such embodiments, the NEF 452 may authenticate, authorize, or throttle the AFs. NEF 452 may also translate information exchanged with the AF 460 and information exchanged with internal network functions. For example, the NEF 452 may translate between an AF-Service-Identifier and an internal 5GC information. NEF 452 may also receive information from other NFs based on exposed capabilities of other NFs. This information may be stored at the NEF 452 as structured data, or at a data storage NF using standardized interfaces. The stored information can then be re-exposed by the NEF 452 to other NFs and AFs, or used for other purposes such as analytics. Additionally, the NEF 452 may exhibit an Nnef service-based interface.

The NRF 454 may support service discovery functions, receive NF discovery requests from NF instances, and provide the information of the discovered NF instances to the NF instances. NRF 454 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 454 may exhibit the Nnrf service-based interface.

The PCF 456 may provide policy rules to control plane functions to enforce them, and may also support unified policy framework to govern network behavior. The PCF 456 may also implement a front end to access subscription information relevant for policy decisions in a UDR of the UDM 458. In addition to communicating with functions over reference points as shown, the PCF 456 exhibit an Npcf service-based interface.

The UDM 458 may handle subscription-related information to support the network entities' handling of communication sessions, and may store subscription data of UE 402. For example, subscription data may be communicated via an N8 reference point between the UDM 458 and the AMF 444. The UDM 458 may include two parts, an application front end and a UDR. The UDR may store subscription data and policy data for the UDM 458 and the PCF 456, and/or structured data for exposure and application data (including PFDs for application detection, application request information for multiple UEs 402) for the NEF 452. The Nudr service-based interface may be exhibited by the UDR 221 to allow the UDM 458, PCF 456, and NEF 452 to access a particular set of the stored data, as well as to read, update (e.g., add, modify), delete, and subscribe to notification of relevant data changes in the UDR. The UDM may include a UDM-FE, which is in charge of processing credentials, location management, subscription management, and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 458 may exhibit the Nudm service-based interface.

The AF 460 may provide application influence on traffic routing, provide access to NEF, and interact with the policy framework for policy control.

In some embodiments, the 5GC 440 may enable edge computing by selecting operator/3rd party services to be geographically close to a point that the UE 402 is attached to the network. This may reduce latency and load on the network. To provide edge-computing implementations, the 5GC 440 may select a UPF 448 close to the UE 402 and execute traffic steering from the UPF 448 to data network 436 via the N6 interface. This may be based on the UE subscription data, UE location, and information provided by the AF 460. In this way, the AF 460 may influence UPF (re)selection and traffic routing. Based on operator deployment, when AF 460 is considered to be a trusted entity, the network operator may permit AF 460 to interact directly with relevant NFs. Additionally, the AF 460 may exhibit an Naf service-based interface.

The data network 436 may represent various network operator services, Internet access, or third party services that may be provided by one or more servers including, for example, application/content server 438.

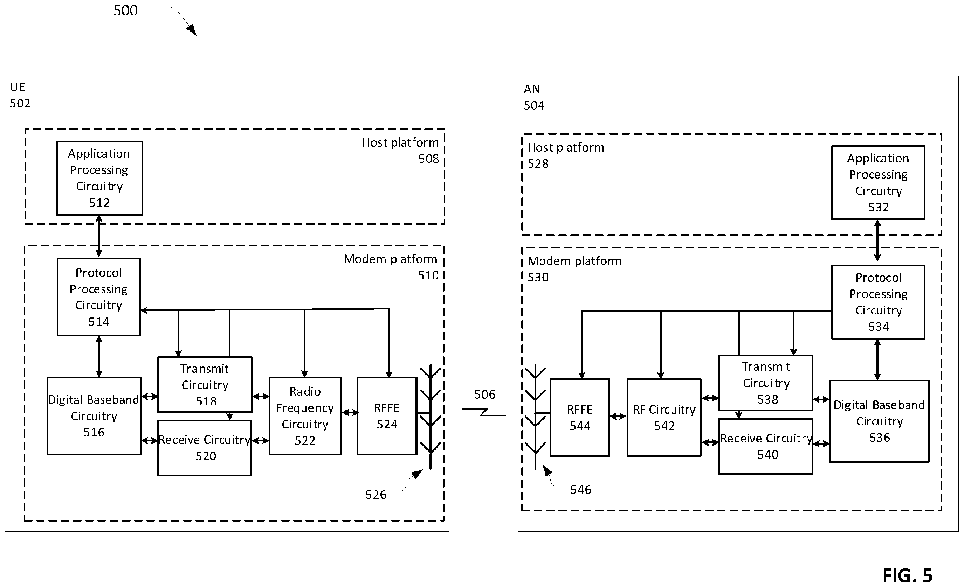

FIG. 5 schematically illustrates a wireless network 500 in accordance with various embodiments. The wireless network 500 may include a UE 502 in wireless communication with an AN 504. The UE 502 and AN 504 may be similar to, and substantially interchangeable with, like-named components described elsewhere herein.

The UE 502 may be communicatively coupled with the AN 504 via connection 506. The connection 506 is illustrated as an air interface to enable communicative coupling, and can be consistent with cellular communications protocols such as an LTE protocol or a 5G NR protocol operating at mmWave or sub-6GHz frequencies.

The UE 502 may include a host platform 508 coupled with a modem platform 510. The host platform 508 may include application processing circuitry 512, which may be coupled with protocol processing circuitry 514 of the modem platform 510. The application processing circuitry 512 may run various applications for the UE 502 that source/sink application data. The application processing circuitry 512 may further implement one or more layer operations to transmit/receive application data to/from a data network. These layer operations may include transport (for example UDP) and Internet (for example, IP) operations

The protocol processing circuitry 514 may implement one or more of layer operations to facilitate transmission or reception of data over the connection 506. The layer operations implemented by the protocol processing circuitry 514 may include, for example, MAC, RLC, PDCP, RRC and NAS operations.

The modem platform 510 may further include digital baseband circuitry 516 that may implement one or more layer operations that are "below" layer operations performed by the protocol processing circuitry 514 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 510 may further include transmit circuitry 518, receive circuitry 520, RF circuitry 522, and RF front end (RFFE) 524, which may include or connect to one or more antenna panels 526. Briefly, the transmit circuitry 518 may include a digital-to-analog converter, mixer, intermediate frequency (IF) components, etc.; the receive circuitry 520 may include an analog-to-digital converter, mixer, IF components, etc.; the RF circuitry 522 may include a low-noise amplifier, a power amplifier, power tracking components, etc.; RFFE 524 may include filters (for example, surface/bulk acoustic wave filters), switches, antenna tuners, beamforming components (for example, phase-array antenna components), etc. The selection and arrangement of the components of the transmit circuitry 518, receive circuitry 520, RF circuitry 522, RFFE 524, and antenna panels 526 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 514 may include one or more instances of control circuitry (not shown) to provide control functions for the transmit/receive components.

A UE reception may be established by and via the antenna panels 526, RFFE 524, RF circuitry 522, receive circuitry 520, digital baseband circuitry 516, and protocol processing circuitry 514. In some embodiments, the antenna panels 526 may receive a transmission from the AN 504 by receive-beamforming signals received by a plurality of antennas/antenna elements of the one or more antenna panels 526.

A UE transmission may be established by and via the protocol processing circuitry 514, digital baseband circuitry 516, transmit circuitry 518, RF circuitry 522, RFFE 524, and antenna panels 526. In some embodiments, the transmit components of the UE 504 may apply a spatial filter to the data to be transmitted to form a transmit beam emitted by the antenna elements of the antenna panels 526.

Similar to the UE 502, the AN 504 may include a host platform 528 coupled with a modem platform 530. The host platform 528 may include application processing circuitry 532 coupled with protocol processing circuitry 534 of the modem platform 530. The modem platform may further include digital baseband circuitry 536, transmit circuitry 538, receive circuitry 540, RF circuitry 542, RFFE circuitry 544, and antenna panels 546. The components of the AN 504 may be similar to and substantially interchangeable with like-named components of the UE 502. In addition to performing data transmission/reception as described above, the components of the AN 508 may perform various logical functions that include, for example, RNC functions such as radio bearer management, uplink and downlink dynamic radio resource management, and data packet scheduling.

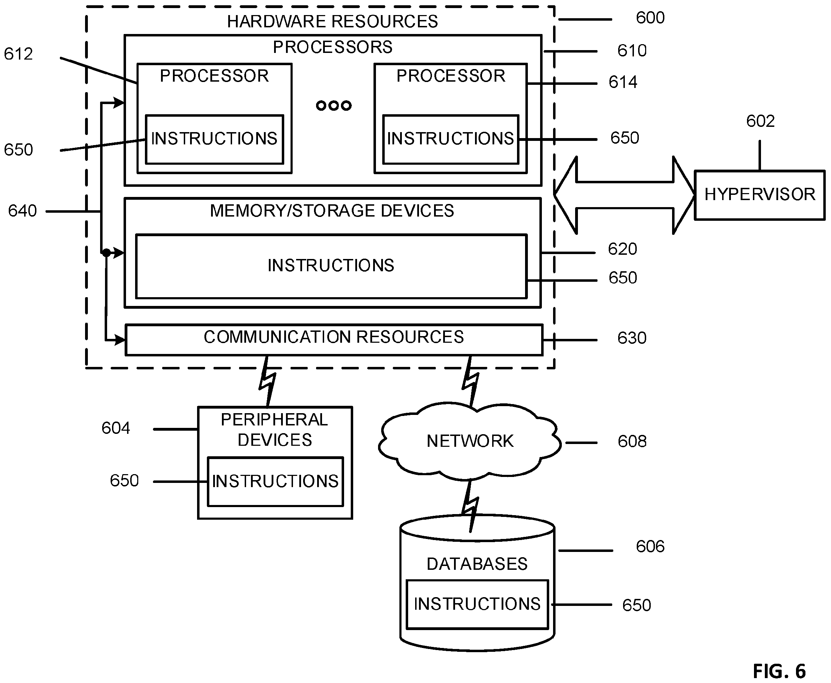

FIG. 6 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 6 shows a diagrammatic representation of hardware resources 600 including one or more processors (or processor cores) 610, one or more memory/storage devices 620, and one or more communication resources 630, each of which may be communicatively coupled via a bus 640 or other interface circuitry. For embodiments where node virtualization (e.g., NFV) is utilized, a hypervisor 602 may be executed to provide an execution environment for one or more network slices/sub-slices to utilize the hardware resources 600.

The processors 610 may include, for example, a processor 612 and a processor 614. The processors 610 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 620 may include main memory, disk storage, or any suitable combination thereof. The memory/storage devices 620 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 630 may include interconnection or network interface controllers, components, or other suitable devices to communicate with one or more peripheral devices 604 or one or more databases 606 or other network elements via a network 608. For example, the communication resources 630 may include wired communication components (e.g., for coupling via USB, Ethernet, etc.), cellular communication components, NFC components, Bluetooth® (or Bluetooth® Low Energy) components, Wi-Fi® components, and other communication components.

Instructions 650 may comprise software, a program, an application, an applet, an app, or other executable code for causing at least any of the processors 610 to perform any one or more of the methodologies discussed herein. The instructions 650 may reside, completely or partially, within at least one of the processors 610 (e.g., within the processor's cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

EXAMPLE PROCEDURES

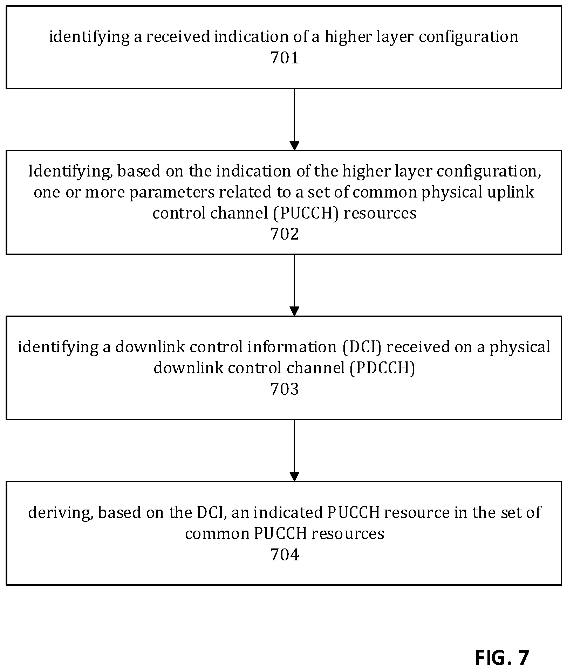

In some embodiments, the electronic device(s), network(s), system(s), chip(s) or component(s), or portions or implementations thereof, of FIGs. 4-6, or some other figure herein, may be configured to perform one or more processes, techniques, or methods as described herein, or portions thereof. One such process is depicted in FIG. 7. The process may be performed by an electronic device that may be, be part of, or include a reduced capacity user equipment (UE). The process may include identifying, at 701, a received indication of a higher layer configuration; identifying, at 702 based on the indication of the higher layer configuration, one or more parameters related to a set of common physical uplink control channel (PUCCH) resources; identifying, at 703, a downlink control information (DCI) received on a physical downlink control channel (PDCCH); and deriving, at 704 based on the DCI, an indicated PUCCH resource in the set of common PUCCH resources.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

**EXAMPLES**

In the following, additional aspects of the disclosure will be described by way of example.

Example 1 may include the method and system of wireless communication to allocate common PUCCH resource for UE with reduced bandwidth:

Received, by UE, the high layer configuration on the parameters to determine a set of common PUCCH resources. Decoded, by UE, a DCI from physical downlink control channel (PDCCH) and derive an indicated PUCCH resource in the set of PUCCH resources.

Example 2 may include the method of example 1 or some other example herein, wherein a PRB offset $2 \cdot RB_{\text{BWP}}^{\text{offset}}$ determined for a row in Table 9.2.1-1 and the offset $RB_{\text{Redcap}}$ are used to determine the starting PRB of a set of common PUCCH.

Example 3 may include the method of example 2 or some other example herein, wherein if UE is indicated with a lower part of BWP for PUCCH resource, the UE determines the PRB index of the PUCCH transmission as $RB_{\text{Redcap}} + 2 \cdot RB_{\text{BWP}}^{\text{offset}} + \lfloor r_{\text{PUCCH}}/N_{\text{CS}} \rfloor$. Otherwise, the UE determines the PRB index of the PUCCH transmission as $N_{\text{BWP}}^{\text{size}} - 1 - RB_{\text{Redcap}} - 2 \cdot RB_{\text{BWP}}^{\text{offset}} - \lfloor r_{\text{PUCCH}}/N_{\text{CS}} \rfloor$. The UE determines the initial cyclic shift index in the set of initial cyclic shift indexes as $r_{\text{PUCCH}} \bmod N_{\text{CS}}$.

Example 4 may include the method of example 1 or some other example herein, wherein if UE is indicated with a lower part of BWP for PUCCH resource,

- If $\lfloor r_{\text{PUCCH}}/8 \rfloor = 0$, the UE determines the PRB index of the PUCCH transmission as $RB_{\text{Redcap}} + 2 \cdot RB_{\text{BWP}}^{\text{offset}} + \lfloor r_{\text{PUCCH}}/N_{\text{CS}} \rfloor$. The UE determines the initial cyclic shift index in the set of initial cyclic shift indexes as $r_{\text{PUCCH}} \bmod N_{\text{CS}}$.

- If $\lfloor r_{\text{PUCCH}}/8 \rfloor = 1$, the UE determines the PRB index of the PUCCH transmission as $RB_{\text{Redcap}} + 2 \cdot RB_{\text{BWP}}^{\text{offset}} + \Delta + \lfloor (r_{\text{PUCCH}} - 8)/N_{\text{CS}} \rfloor$. The UE determines the initial cyclic shift index in the set of initial cyclic shift indexes as $(r_{\text{PUCCH}} - 8)_{\text{mod}} N_{\text{CS}}$.

Otherwise, if UE is indicated with a upper part of BWP for PUCCH resource,

- If $\lfloor r_{\text{PUCCH}}/8 \rfloor = 0$, the UE determines the PRB index of the PUCCH transmission as

$$N_{\text{BWP}}^{\text{size}} - 1 - RB_{\text{Redcap}} - 2 \cdot RB_{\text{BWP}}^{\text{offset}} - \lfloor r_{\text{PUCCH}}/N_{\text{CS}} \rfloor$$ . The UE determines the initial cyclic shift index in the set of initial cyclic shift indexes as $r_{\text{PUCCH}} \bmod N_{\text{CS}}$.

- If $\lfloor r_{\text{PUCCH}}/8 \rfloor = 1$, the UE determines the PRB index of the PUCCH transmission as

$$N_{\text{BWP}}^{\text{size}} - 1 - RB_{\text{Redcap}} - 2 \cdot RB_{\text{BWP}}^{\text{offset}} - \Delta - \lfloor (r_{\text{PUCCH}} - 8)/N_{\text{CS}} \rfloor$$ . The UE determines the initial cyclic shift index in the set of initial cyclic shift indexes as $(r_{\text{PUCCH}} - 8) \bmod N_{\text{CS}}$.

Example 5 may include the method of example 2 or some other example herein, wherein update Table 9.2.1-1 by scaling the parameter of PRB offset $RB_{\text{BWP}}^{\text{offset}}$ by 2.

Example 6 may include the method of examples 2-5 or some other example herein, the value range of $RB_{\text{Redcap}}$ is a subset of {0,2,3,4,6}.

Example 7 may include the method of example 1 or some other example herein, wherein the PRB offset $RB_{\text{BWP}}^{\text{offset}}$ of a row in Table 9.2.1-1 and the offset $RB_{\text{Redcap}}$ are used to determine the starting PRB of a set of common PUCCH

Example 8 may include the method of example 6 or some other example herein, wherein if UE is indicated with a lower part of BWP for PUCCH resource, the UE determines the PRB index of the PUCCH transmission as

$$RB_{\text{Redcap}} + RB_{\text{BWP}}^{\text{offset}} + \lfloor r_{\text{PUCCH}}/N_{\text{CS}} \rfloor$$ . Otherwise, the UE determines the PRB index of the PUCCH transmission

as $$N_{\text{BWP}}^{\text{size}} - 1 - RB_{\text{Redcap}} - RB_{\text{BWP}}^{\text{offset}} - \lfloor r_{\text{PUCCH}}/N_{\text{CS}} \rfloor$$ The UE determines the initial cyclic shift index in the set of initial cyclic shift indexes as $r_{\text{PUCCH}} \bmod N_{\text{CS}}$.

Example 9 may include the method of example 6 or some other example herein, wherein if UE is indicated with a lower part of BWP for PUCCH resource,

- If $\lfloor r_{\text{PUCCH}}/8 \rfloor = 0$, the UE determines the PRB index of the PUCCH transmission as

$$RB_{\text{Redcap}} + RB_{\text{BWP}}^{\text{offset}} + \lfloor r_{\text{PUCCH}}/N_{\text{CS}} \rfloor$$ . The UE determines the initial cyclic shift index in the set of initial cyclic shift indexes as $r_{\text{PUCCH}} \bmod N_{\text{CS}}$.

- If $\lfloor r_{\text{PUCCH}}/8 \rfloor = 1$, the UE determines the PRB index of the PUCCH transmission as

$$RB_{\text{Redcap}} + RB_{\text{BWP}}^{\text{offset}} + \Delta + \lfloor (r_{\text{PUCCH}} - 8)/N_{\text{CS}} \rfloor$$ . The UE determines the initial cyclic shift index in the set of initial cyclic shift indexes as $(r_{\text{PUCCH}} - 8) \bmod N_{\text{CS}}$. Otherwise, if UE is indicated with a upper part of BWP for PUCCH resource,

- If $\lfloor r_{\text{PUCCH}}/8 \rfloor = 0$, the UE determines the PRB index of the PUCCH transmission as

$$N_{\text{BWP}}^{\text{size}} - 1 - RB_{\text{Redcap}} - RB_{\text{BWP}}^{\text{offset}} - \lfloor r_{\text{PUCCH}}/N_{\text{CS}} \rfloor$$ . The UE determines the initial cyclic shift index in the set of initial cyclic shift indexes as $r_{\text{PUCCH}} \bmod N_{\text{CS}}$.

- If $\lfloor r_{\text{PUCCH}}/8 \rfloor = 1$, the UE determines the PRB index of the PUCCH transmission as

$$N_{\text{BWP}}^{\text{size}} - 1 - RB_{\text{Redcap}} - RB_{\text{BWP}}^{\text{offset}} - \Delta - \lfloor (r_{\text{PUCCH}} - 8)/N_{\text{CS}} \rfloor$$ . The UE determines the initial cyclic shift index in the set of initial cyclic shift indexes as $(r_{\text{PUCCH}} - 8) \bmod N_{\text{CS}}$.

Example 10 may include the method of examples 6-8 or some other example herein, wherein the value range of $RB_{\text{Redcap}}$ is a subset of {0,4, 8, 12}.

Example 11 includes a method to be performed by an electronic device, wherein the method comprises:

identifying a received indication of a higher layer configuration;
identifying, based on the indication of the higher layer configuration, one or more parameters related to a set of common physical uplink control channel (PUCCH) resources;

identifying a downlink control information (DCI) received on a physical downlink control channel (PDCCH); and

deriving, based on the DCI, an indicated PUCCH resource in the set of common PUCCH resources.

Example 12 includes the method of example 11, and/or some other example herein, wherein the electronic device is, is part of, or includes a reduced-capacity user equipment (UE).

Example 13 includes the method of any of examples 11-12, and/or some other example herein, wherein the higher layer configuration includes an indication of a physical resource block offset that is used to identify the set of common PUCCH resources.

Example 14 includes the method of any of examples 11-13, and/or some other example herein, wherein the set of common PUCCH resources are identified based on Table 9.2.1-1 of the 3GPP TS 38.213.

Example 15 includes the method of any of examples 11-14, and/or some other example herein, wherein the indication of the higher layer configuration includes an indication of a PRB index and/or an indication that may be used to derive the PRB index (e.g., a BWP for the PUCCH resource).

Example 16 may include an apparatus comprising means to perform one or more elements of a method described in or related to any of examples 1-15, or any other method or process described herein.

Example 17 may include one or more non-transitory computer-readable media comprising instructions to cause an electronic device, upon execution of the instructions by one or more processors of the electronic device, to perform one or more elements of a method described in or related to any of examples 1-15, or any other method or process described herein.

Example 18 may include an apparatus comprising logic, modules, or circuitry to perform one or more elements of a method described in or related to any of examples 1-15, or any other method or process described herein.

Example 19 may include a method, technique, or process as described in or related to any of examples 1-15, or portions or parts thereof.

Example 20 may include an apparatus comprising: one or more processors and one or more computer-readable media comprising instructions that, when executed by the one or more processors, cause the one or more processors to perform the method, techniques, or process as described in or related to any of examples 1-15, or portions thereof.

Example 21 may include a signal as described in or related to any of examples 1-15, or portions or parts thereof.

Example 22 may include a datagram, packet, frame, segment, protocol data unit (PDU), or message as described in or related to any of examples 1-15, or portions or parts thereof, or otherwise described in the present disclosure.

Example 23 may include a signal encoded with data as described in or related to any of examples 1-15, or portions or parts thereof, or otherwise described in the present disclosure.

Example 24 may include a signal encoded with a datagram, packet, frame, segment, protocol data unit (PDU), or message as described in or related to any of examples 1-15, or portions or parts thereof, or otherwise described in the present disclosure.

Example 25 may include an electromagnetic signal carrying computer-readable instructions, wherein execution of the computer-readable instructions by one or more processors is to cause the one or more processors to perform the method, techniques, or process as described in or related to any of examples 1-15, or portions thereof.

Example 26 may include a computer program comprising instructions, wherein execution of the program by a processing element is to cause the processing element to carry out the method, techniques, or process as described in or related to any of examples 1-15, or portions thereof.

Example 27 may include a signal in a wireless network as shown and described herein.

Example 28 may include a method of communicating in a wireless network as shown and described herein.

Example 29 may include a system for providing wireless communication as shown and described herein.

Example 30 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

## Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

3GPP Third Generation Partnership Project

4G Fourth Generation

5G Fifth Generation

5GC 5G Core network

AC Application Client

ACR Application Context Relocation

ACK Acknowledgement

ACID Application Client Identification

AF Application Function

AM Acknowledged Mode

Aggregate AMBR Maximum Bit Rate

AMF Access and Mobility Management Function

AN Access Network

ANR Automatic Neighbour Relation

AOA Angle of Arrival

AP Application Protocol, Antenna Port, Access Point

API Application Programming Interface

APN Access Point Name

ARP Allocation and Retention Priority

ARQ Automatic Repeat Request

AS Access Stratum

ASP Application Service Provider

ASN.1 Abstract Syntax Notation One

AUSF Authentication Server Function

CPICHCommon Pilot Channel

CQI Channel Quality Indicator

CPU CSI processing

AWGN Additive White Gaussian Noise

BAP Backhaul Adaptation Protocol

BCH Broadcast Channel

BER Bit Error Ratio

BFD Beam Failure Detection

BLER Block Error Rate

BPSK Binary Phase Shift Keying

BRAS Broadband Remote Access Server

BSS Business Support System

BS Base Station

BSR Buffer Status Report

BW Bandwidth

BWP Bandwidth Part

C-RNTI Cell Radio Network Temporary Identity

CA Carrier Aggregation, Certification Authority

CAPEX CAPital EXpenditure

CBRA Contention Based Random Access

CC Component Carrier, Country Code, Cryptographic Checksum

CCA Clear Channel Assessment

CCE Control Channel Element

CCCH Common Control Channel

CE Coverage Enhancement

CDM Content Delivery Network

CSMA/CA CSMA with collision avoidance

CSS Common Search Space, Cell- specific Search Space

CDMA Code-Division Multiple Access

CDR Charging Data Request

CDR Charging Data Response

CFRA Contention Free Random Access

CG Cell Group

CGF Charging Gateway Function

CHF Charging Function

CI Cell Identity

CID Cell-ID (e.g., positioning method)

CIM Common Information Model

CIR Carrier to Interference Ratio

CK Cipher Key

CM Connection Management, Conditional Mandatory

CMAS Commercial Mobile Alert Service

CMD Command

CMS Cloud Management System

CO Conditional Optional

CoMP Coordinated MultiPoint

CORESET Control Resource Set

COTS Commercial Off-The-Shelf

CP Control Plane, Cyclic Prefix, Connection Point

CPD Connection Point Descriptor

CPE Customer Premise Equipment

E2E End-to-End

EAS Edge Application Server

ECCA extended clear channel assessment,

(continued)

| | | |
|---|---|---|
| unit, Central Processing Unit | CTF Charging Trigger Function | extended CCA |
| C/R Command/Respons e field bit | CTS Clear-to-Send CW Codeword | ECCE Enhanced Control Channel Element, Enhanced CCE |
| CRAN Cloud Radio Access Network, Cloud RAN | CWS Contention Window Size D2D Device-to-Device DC Dual Connectivity, | ED Energy Detection EDGE Enhanced Datarates for GSM Evolution (GSM Evolution) |
| CRB Common Resource Block | Direct Current DCI Downlink Control | EAS Edge Application Server |
| CRC Cyclic Redundancy Check | Information DF Deployment Flavour | EASID Edge Application Server Identification |
| CRI Channel-State Information Resource Indicator, CSI-RS Resource Indicator | DL Downlink DMTF Distributed Management Task Force | ECS Edge Configuration Server ECSP Edge Computing Service |
| C-RNTI Cell RNTI | DPDK Data Plane Development Kit | Provider |
| CS Circuit Switched | | |
| CSCF call session control function | DM-RS, DMRS Demodulation | EDN Edge Data Network |
| CSAR Cloud Service Archive | Reference Signal DN Data network | EEC Edge Enabler Client |
| CSI Channel-State Information | DNN Data Network Name | EECID Edge Enabler Client Identification |
| CSI-IM CSI Interference Measurement | DNAI Data Network Access Identifier | EES Edge Enabler Server |
| CSI-RS CSI Reference Signal | DRB Data Radio Bearer DRS Discovery | EESID Edge Enabler Server |
| CSI-RSRP CSI reference signal received power | Reference Signal DRX Discontinuous Reception | Identification EHE Edge Hosting Environment |
| CSI-RSRQ CSI reference signal received quality | DSL Domain Specific Language. Digital Subscriber Line | EGMF Exposure Governance Management |
| CSI-SINR CSI signalto-noise and interference ratio | DSLAM DSL Access Multiplexer DwPTS Downlink | Function EGPRS Enhanced GPRS |
| CSMA Carrier Sense Multiple Access | Pilot Time Slot E-LAN Ethernet Local Area Network | EIR Equipment Identity Register |
| eLAA enhanced Licensed Assisted Access, enhanced LAA | FACCH Fast Associated Control CHannel | G-RNTI GERAN Radio Network Temporary Identity |
| EM Element Manager | FACCH/F Fast | GERAN |
| eMBB Enhanced Mobile Broadband | Associated Control Channel/Full rate | GSM EDGE RAN, GSM EDGE Radio |
| EMS Element Management System | FACCH/H Fast Associated Control | Access Network GGSN Gateway GPRS |
| eNB evolved NodeB, E-UTRAN Node B | Channel/Half rate FACH Forward Access | Support Node GLONASS |

(continued)

| | | |
|---|---|---|
| EN-DC E-UTRA-NR Dual Connectivity | Channel FAUSCH Fast Uplink Signalling Channel | GLObal'naya NAvigatsionnaya Sputnikovaya |
| EPC Evolved Packet Core | FB Functional Block | Sistema (Engl.: |
| EPDCCH enhanced PDCCH, enhanced Physical Downlink Control Cannel | FBI Feedback Information FCC Federal Communications Commission | Global Navigation Satellite System) gNB Next Generation NodeB |
| EPRE Energy per resource element | FCCH Frequency Correction CHannel | gNB-CU gNB-centralized unit, Next Generation NodeB |
| EPS Evolved Packet System | FDD Frequency Division Duplex | centralized unit gNB-DU gNBdistributed unit, Next |
| EREG enhanced REG, enhanced resource element groups | FDM Frequency Division Multiplex FDMAFrequency Division | Generation NodeB distributed unit |
| ETSI European Telecommunication s Standards Institute | Multiple Access FE Front End FEC Forward Error | GNSS Global Navigation Satellite System GPRS General Packet |
| ETWS Earthquake and Tsunami Warning System | Correction FFS For Further Study FFT Fast Fourier | Radio Service GPSI Generic Public Subscription |
| eUICC embedded UICC, embedded Universal Integrated Circuit Card | Transformation feLAA further enhanced Licensed Assisted | Identifier GSM Global System for Mobile |
| E-UTRA Evolved UTRA | Access, further enhanced LAA | Communications, Groupe Special |
| E-UTRAN Evolved UTRAN | FN Frame Number FPGA Field-Programmable | Mobile GTP GPRS Tunneling |
| EV2X Enhanced V2X F1AP F1 Application Protocol | Gate Array FR Frequency Range | Protocol GTP-UGPRS Tunnelling Protocol for User |
| F1-C F1 Control plane interface | FQDN Fully Qualified Domain Name | Plane GTS Go To Sleep Signal |
| F1-U F1 User plane interface | | (related to WUS) |
| GUMMEI Globally Unique MME Identifier | IDFT Inverse Discrete Fourier Transform | IP-CAN IP-Connectivity Access |
| GUTI Globally Unique Temporary UE Identity | IE Information element | Network IP-M IP Multicast |
| HARQ Hybrid ARQ, Hybrid Automatic Repeat Request | IBE In-Band Emission IEEE Institute of | IPv4 Internet Protocol Version 4 IPv6 Internet Protocol |
| HANDO Handover HFN HyperFrame Number | Electrical and Electronics Engineers IEI Information | Version 6 IR Infrared IS In Sync |
| HHO Hard Handover HLR Home Location Register | Element Identifier IEIDL Information Element Identifier | IRP Integration Reference Point ISDN Integrated Services |
| HN Home Network HO Handover | Data Length IETF Internet | Digital Network ISIM IM Services |

(continued)

| | | |
|---|---|---|
| HPLMN Home Public Land Mobile Network | Engineering Task Force | Identity Module |
| | IF Infrastructure | ISO International Organisation for Standardisation |
| HSDPA High Speed Downlink Packet Access | IIOT Industrial Internet of Things | ISP Internet Service Provider |
| HSN Hopping Sequence Number | IM Interference Measurement, Intermodulation, IP Multimedia | IWF Interworking-Function |
| HSPA High Speed Packet Access | IMC IMS Credentials | I-WLAN Interworking WLAN |
| HSS Home Subscriber Server | IMEI International Mobile Equipment Identity | Constraint length of the convolutional code, |
| HSUPA High Speed Uplink Packet Access | IMGI International mobile group identity | USIM Individual key |
| HTTP Hyper Text Transfer Protocol | IMPI IP Multimedia Private Identity | kB Kilobyte (1000 bytes) |
| HTTPS Hyper Text Transfer Protocol Secure (https is http/1.1 over SSL, i.e. port 443) | IMPU IP Multimedia Public identity | kbps kilo-bits per second |
| | IMS IP Multimedia Subsystem | Kc Ciphering key Ki Individual subscriber authentication key |
| I-Block Information Block | IMSI International Mobile Subscriber Identity | KPI Key Performance Indicator |
| ICCID Integrated Circuit Card Identification | IoT Internet of Things | KQI Key Quality Indicator |
| IAB Integrated Access and Backhaul | IP Internet Protocol Ipsec IP Security, Internet Protocol Security | KSI Key Set Identifier ksps kilo-symbols per second |
| ICIC Inter-Cell Interference Coordination | | KVM Kernel Virtual Machine |
| ID Identity, identifier | | |
| L1 Layer 1 (physical layer) | M2M Machine-to-Machine | MGRP Measurement Gap Repetition Period |
| L1-RSRP Layer 1 reference signal received power | MAC Medium Access Control (protocol layering context) | MIB Master Information Block, Management Information Base |
| L2 Layer 2 (data link layer) | MAC Message authentication code (security/encryption context) | MIMO Multiple Input Multiple Output |
| L3 Layer 3 (network layer) | | MLC Mobile Location Centre |
| LAA Licensed Assisted Access | MAC-A MAC used for authentication and key agreement (TSG T WG3 context) | MM Mobility Management |
| LAN Local Area Network | | MME Mobility Management Entity |
| LADN Local Area Data Network | MAC-IMAC used for data integrity of signalling messages (TSG T WG3 context) | MN Master Node MNO Mobile Network Operator |
| LBT Listen Before Talk | | MO Measurement Object, Mobile Originated |
| LCM LifeCycle Management | MANO Management and Orchestration | |
| LCR Low Chip Rate | | |
| LCS Location Services | | MPBCH MTC |

(continued)

| | | |
|---|---|---|
| LCID Logical Channel ID | MBMS Multimedia Broadcast and Multicast Service | Physical Broadcast CHannel |
| LI Layer Indicator | | MPDCCH MTC |
| LLC Logical Link Control, Low Layer Compatibility | MBSFN Multimedia Broadcast multicast service Single Frequency Network | Physical Downlink Control CHannel |
| | | MPDSCH MTC |
| LMF Location Management Function | MCC Mobile Country Code | Physical Downlink Shared CHannel |
| LOS Line of Sight | | MPRACH MTC |
| | MCG Master Cell Group | Physical Random |
| LPLMN Local PLMN | MCOT Maximum Channel Occupancy Time | Access CHannel |
| | | MPUSCH MTC |
| LPP LTE Positioning Protocol | MCS Modulation and coding scheme | Physical Uplink Shared Channel |
| LSB Least Significant Bit | MDAF Management Data Analytics Function | MPLS MultiProtocol Label Switching |
| LTE Long Term Evolution | MDAS Management Data Analytics Service | MS Mobile Station |
| | | MSB Most Significant Bit |
| LWA LTE-WLAN aggregation | MDT Minimization of Drive Tests | MSC Mobile Switching Centre |
| LWIP LTE/WLAN Radio Level Integration with IPsec Tunnel | ME Mobile Equipment | |
| | MeNB master eNB | MSI Minimum System Information, MCH Scheduling Information |
| | MER Message Error Ratio | |
| LTE Long Term Evolution | MGL Measurement Gap Length | |
| MSID Mobile Station Identifier | NFV Network Functions Virtualization | NSA Non-Standalone operation mode |
| MSIN Mobile Station Identification Number | NFVI NFV Infrastructure | NSD Network Service Descriptor |
| | NFVO NFV Orchestrator | |
| | NG Next Generation, Next Gen | NSR Network Service Record |
| MSISDN Mobile Subscriber ISDN Number | NGEN-DC NG-RAN E-UTRA-NR Dual Connectivity | NSSAINetwork Slice Selection Assistance Information |
| MT Mobile Terminated, Mobile Termination | NM Network Manager | S-NNSAI Single-NSSAI |
| MTC Machine-Type Communications | NMS Network Management System | NSSF Network Slice Selection Function |
| mMTCmassive MTC, massive Machine-Type Communications | N-PoP Network Point of Presence | NW Network |
| | NMIB, N-MIB Narrowband MIB | NWUSNarrowband wakeup signal, Narrowband WUS |
| MU-MIMO Multi User MIMO | NPBCH Narrowband Physical Broadcast CHannel | NZP Non-Zero Power |
| MWUS MTC wakeup signal, MTC WUS | | O&M Operation and Maintenance |
| | NPDCCH Narrowband Physical Downlink Control CHannel | ODU2 Optical channel Data Unit - type 2 |
| NACK Negative Acknowledgement | | |
| NAI Network Access Identifier | NPDSCH Narrowband Physical Downlink Shared CHannel | OFDM Orthogonal Frequency Division Multiplexing |
| NAS Non-Access | | |

(continued)

| | | |
|---|---|---|
| Stratum, Non- Access Stratum layer | NPRACH Narrowband Physical Random Access CHannel | OFDMA Orthogonal Frequency Division Multiple Access |
| NCT Network Connectivity Topology | NPUSCH Narrowband Physical Uplink | OOB Out-of-band OOS Out of Sync |
| NC-JT Non-Coherent Joint Transmission | Shared CHannel NPSS Narrowband | OPEX OPerating EXpense OSI Other System |
| NEC Network Capability Exposure | Primary Synchronization | Information OSS Operations Support |
| NE-DC NR-E-UTRA Dual Connectivity | Signal NSSS Narrowband Secondary | System OTA over-the-air PAPR Peak-to-Average |
| NEF Network Exposure Function | Synchronization Signal | Power Ratio PAR Peak to Average |
| NF Network Function | NR New Radio, | Ratio |
| NFP Network Forwarding Path | Neighbour Relation NRF NF Repository | PBCH Physical Broadcast Channel |
| NFPD Network Forwarding Path Descriptor | Function NRS Narrowband Reference Signal | PC Power Control, Personal Computer |
| | NS Network Service | |
| PCC Primary Component Carrier, | PIN Personal Identification Number | PSS Primary Synchronization |
| Primary CC | PM Performance | Signal |
| P-CSCF Proxy CSCF | Measurement PMI Precoding Matrix | PSTN Public Switched Telephone Network |
| PCell Primary Cell | Indicator | PT-RS Phase-tracking |
| PCI Physical Cell ID, Physical Cell | PNF Physical Network Function | reference signal PTT Push-to-Talk |
| Identity | PNFD Physical Network | PUCCH Physical |
| PCEF Policy and Charging | Function Descriptor | Uplink Control Channel |
| Enforcement | PNFR Physical Network Function Record | PUSCH Physical |
| Function | POC PTT over Cellular | Uplink Shared |
| PCF Policy Control Function | PP, PTP Point-to-Point | Channel QAM Quadrature |
| PCRF Policy Control and Charging Rules | PPP Point-to-Point Protocol | Amplitude Modulation QCI QoS class of |
| Function | PRACH Physical | identifier |
| PDCP Packet Data Convergence Protocol, | RACH PRB Physical resource | QCL Quasi co-location QFI QoS Flow ID, QoS |
| Packet Data Convergence | block PRG Physical resource | Flow Identifier QoS Quality of Service |
| Protocol layer | block group | QPSK Quadrature |
| PDCCH Physical Downlink Control | ProSe Proximity Services, Proximity-Based | (Quaternary) Phase Shift Keying |
| Channel | Service | QZSS Quasi-Zenith |
| PDCP Packet Data Convergence Protocol | PRS Positioning Reference Signal | Satellite System RA-RNTI Random |
| PDN Packet Data Network, Public Data | PRR Packet Reception Radio | Access RNTI RAB Radio Access |

(continued)

| | | |
|---|---|---|
| Network | PS Packet Services | Bearer, Random |
| PDSCH Physical | PSBCH Physical | Access Burst |
| Downlink Shared | Sidelink Broadcast | RACH Random Access |
| Channel | Channel | Channel |
| PDU Protocol Data Unit | PSDCH Physical | RADIUS Remote |
| PEI Permanent | Sidelink Downlink | Authentication Dial In |
| Equipment Identifiers | Channel | User Service |
| PFD Packet Flow | PSCCH Physical | RAN Radio Access |
| Description | Sidelink Control | Network |
| P-GW PDN Gateway | Channel | RAND RANDom number |
| PHICH Physical | PSSCH Physical | (used for |
| hybrid-ARQ indicator | Sidelink Shared | authentication) |
| channel | Channel | RAR Random Access |
| PHY Physical layer | PSCell Primary SCell | Response |
| PLMN Public Land Mobile Network | | RAT Radio Access Technology |
| RAU Routing Area | RRM Radio Resource | SCEF Service |
| Update | Management | Capability Exposure |
| RB Resource block, | RS Reference Signal | Function |
| Radio Bearer | RSRP Reference Signal | SC-FDMA Single |
| RBG Resource block | Received Power | Carrier Frequency |
| group | RSRQ Reference Signal | Division Multiple |
| REG Resource Element | Received Quality | Access |
| Group | RSSI Received Signal | SCG Secondary Cell |
| Rel Release | Strength Indicator | Group |
| REQ REQuest | RSU Road Side Unit | SCM Security Context |
| RF Radio Frequency | RSTD Reference Signal | Management |
| RI Rank Indicator | Time difference | SCS Subcarrier Spacing |
| RIV Resource indicator | RTP Real Time Protocol | SCTP Stream Control |
| value | RTS Ready-To-Send | Transmission |
| RL Radio Link | RTT Round Trip Time | Protocol |
| RLC Radio Link | Rx Reception, | SDAP Service Data |
| Control, Radio Link | Receiving, Receiver | Adaptation Protocol, |
| Control layer | S1AP S1 Application | Service Data Adaptation |
| RLC AM RLC | Protocol | Protocol layer |
| Acknowledged Mode | S1-MME S1 for the | SDL Supplementary |
| RLC UM RLC | control plane | Downlink |
| Unacknowledged Mode | S1-U S1 for the user | SDNF Structured Data |
| RLF Radio Link Failure | plane | Storage Network |
| RLM Radio Link | S-CSCF serving | Function |
| Monitoring | CSCF | SDP Session Description |
| RLM-RS Reference | S-GW Serving Gateway | Protocol |
| Signal for RLM | S-RNTI SRNC | SDSF Structured Data |
| RM Registration | Radio Network | Storage Function |
| Management | Temporary Identity | SDT Small Data |
| RMC Reference | S-TMSI SAE | Transmission |
| Measurement Channel | Temporary Mobile | SDU Service Data Unit |
| RMSI Remaining MSI, | Station Identifier | SEAF Security Anchor |
| Remaining Minimum | SA Standalone | Function |
| System Information | operation mode | SeNB secondary eNB |
| RN Relay Node | SAE System | SEPP Security Edge |
| RNC Radio Network | Architecture Evolution | Protection Proxy |

(continued)

Controller

RNL Radio Network Layer

RNTI Radio Network Temporary Identifier

ROHC RObust Header Compression

RRC Radio Resource Control, Radio Resource Control layer

S-GW Serving Gateway

SI System Information

SI-RNTI System Information RNTI

SIB System Information Block

SIM Subscriber Identity Module

SIP Session Initiated Protocol

SiP System in Package

SL Sidelink

SLA Service Level Agreement

SM Session Management

SMF Session Management Function

SMS Short Message Service

SMSF SMS Function

SMTC SSB-based Measurement Timing Configuration

SN Secondary Node, Sequence Number

SoC System on Chip

SON Self-Organizing Network

SpCell Special Cell

SP-CSI-RNTISemi-Persistent CSI RNTI

SPS Semi-Persistent Scheduling

SQN Sequence number

SR Scheduling Request

SRB Signalling Radio Bearer

SRS Sounding Reference Signal

SS Synchronization

SAP Service Access Point

SAPD Service Access Point Descriptor

SAPI Service Access Point Identifier

SCC Secondary Component Carrier, Secondary CC

SCell Secondary Cell

SS/PBCH Block

SSBRI SS/PBCH Block Resource Indicator, Synchronization Signal Block Resource Indicator

SSC Session and Service Continuity

SS-RSRP Synchronization Signal based Reference Signal Received Power

SS-RSRQ Synchronization Signal based Reference Signal Received Quality

SS-SINR Synchronization Signal based Signal to Noise and Interference Ratio

SSS Secondary Synchronization Signal

SSSG Search Space Set Group

SSSIF Search Space Set Indicator

SST Slice/Service Types

SU-MIMO Single User MIMO

SUL Supplementary Uplink

TA Timing Advance, Tracking Area

TAC Tracking Area Code

TAG Timing Advance Group

SFI Slot format indication

SFTD Space-Frequency Time Diversity, SFN and frame timing difference

SFN System Frame Number

SgNB Secondary gNB

SGSN Serving GPRS Support Node

TBS Transport Block Size

TBD To Be Defined

TCI Transmission Configuration Indicator

TCP Transmission Communication Protocol

TDD Time Division Duplex

TDM Time Division Multiplexing

TDMATime Division Multiple Access

TE Terminal Equipment

TEID Tunnel End Point Identifier

TFT Traffic Flow Template

TMSI Temporary Mobile Subscriber Identity

TNL Transport Network Layer

TPC Transmit Power Control

TPMI Transmitted Precoding Matrix Indicator

TR Technical Report

TRP, TRxP Transmission Reception Point

TRS Tracking Reference Signal

TRx Transceiver

TS Technical Specifications, Technical Standard

TTI Transmission Time Interval

(continued)

| | | |
|---|---|---|
| Signal SSB Synchronization Signal Block | TAI Tracking Area Identity | Tx Transmission, Transmitting, Transmitter |
| SSID Service Set Identifier | TAU Tracking Area Update | |
| U-RNTI UTRAN Radio Network Temporary Identity | TB Transport Block URLLC Ultra-Reliable and Low Latency | VNFFGD VNF Forwarding Graph Descriptor |
| UART Universal Asynchronous Receiver and Transmitter | USB Universal Serial Bus USIM Universal Subscriber Identity Module | VNFMVNF Manager VoIP Voice-over-IP, Voice-over- Internet Protocol |
| UCI Uplink Control Information | USS UE-specific search space | VPLMN Visited Public Land Mobile |
| UE User Equipment | UTRA UMTS Terrestrial | Network |
| UDM Unified Data Management | Radio Access UTRAN Universal | VPN Virtual Private Network |
| UDP User Datagram Protocol | Terrestrial Radio Access Network | VRB Virtual Resource Block |
| UDSF Unstructured Data Storage Network Function | UwPTS Uplink Pilot Time Slot V2I Vehicle-to- Infrastruction | WiMAX Worldwide Interoperability for Microwave Access |
| UICC Universal Integrated Circuit Card | V2P Vehicle-to-Pedestrian | WLANWireless Local Area Network |
| UL Uplink | | WMAN Wireless |
| UM Unacknowledged Mode | V2V Vehicle-to-Vehicle V2X Vehicle-to-everything | Metropolitan Area Network |
| UML Unified Modelling Language | VIM Virtualized | WPANWireless Personal Area Network |
| UMTS Universal Mobile Telecommunication s System | Infrastructure Manager VL Virtual Link, VLAN Virtual LAN, | X2-C X2-Control plane X2-U X2-User plane XML eXtensible Markup |
| UP User Plane | Virtual Local Area | Language |
| UPF User Plane Function | Network VM Virtual Machine | XRES EXpected user RESponse |
| URI Uniform Resource Identifier | VNF Virtualized Network Function | XOR eXclusive OR ZC Zadoff-Chu |
| URL Uniform Resource Locator | VNFFG VNF Forwarding Graph | ZP Zero Power |

**Terminology**

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a singlecore processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC _CONNECTED configured with CA/.

The term "Special Cell" refers to the PCell of the MCG or the PSCell of the SCG for DC operation; otherwise, the term "Special Cell" refers to the Pcell.

**Claims**

1. An apparatus of a New Radio (NR) User Equipment (UE) (502), the apparatus including a radio frequency (RF) interface, and one or more processors (514) coupled to the RF interface and configured to:

   receive a high layer configuration on parameters to determine a set of common PUCCH resources;
   decode Downlink Control Information (DCI) from a Physical Downlink Control Channel (PDCCH); and
   determine an indicated PUCCH resource in the set of PUCCH resources.

2. The apparatus of claim 1, wherein decoding DCI from the PDCCH comprises decoding DCI from a PDCCH scheduling a PDSCH reception or having associated HARQ-ACK information without scheduling a PDSCH reception, and wherein determining the indicated PUCCH resource in the set of PUCCH resources comprises determining the indicated PUCCH resource in the set of PUCCH resources when frequency hopping is disabled by higher layers for a PUCCH transmission.

3. The apparatus of claim 1 or 2, wherein the one or more processors (514) are further configured to determine a starting Physical Resource Block (PRB) of a set of common PUCCH resources using the PRB offset $RB_{\mathrm{BWP}}^{\mathrm{offset}}$ of a row in Table 9.2.1-1 of 3GPP TS 38.213 and an offset $RB_{\mathrm{Redcap}}$ that is configured by higher layers.

4. The apparatus of any one of claims 1 to 3, wherein the one or more processors (514) are further configured to determine a PRB index of the PUCCH transmission in a first mode as $RB_{\mathrm{Redcap}} + RB_{\mathrm{BWP}}^{\mathrm{offset}} + \lfloor r_{\mathrm{PUCCH}}/N_{\mathrm{CS}} \rfloor$ or in a second mode as $N_{\mathrm{BWP}}^{\mathrm{size}} - 1 - RB_{\mathrm{Redcap}} - RB_{\mathrm{BWP}}^{\mathrm{offset}} - \lfloor r_{\mathrm{PUCCH}}/N_{\mathrm{CS}} \rfloor$ where $0 \leq r_{\mathrm{PUCCH}} \leq 15$ is a PUCCH resource index determined based on reception of the PDCCH scheduling a PDSCH reception or having associated HARQ-ACK information without scheduling a PDSCH reception.

5. The apparatus of claim 4, wherein the one or more processors (514) are further configured to determine the PRB index according to the first mode when indicated by higher layer signalling to map the PUCCH resource to a lower part of the Uplink (UL) Bandwidth Part (BWP) in which the PUCCH is to be transmitted, and determining the PRB index according to the second mode otherwise.

6. The apparatus of any one of claims 1 to 5, wherein the one or more processors (514) are further configured to determine an initial cyclic shift index from a set of initial cyclic shift indexes as $r_{\text{puccH}} \bmod N_{\text{CS}}$ where $N_{\text{CS}}$ is the total number of initial cyclic shift indexes in the set of initial cyclic shift indexes.

7. The apparatus of any one of claims 1 to 6, wherein the one or more processors (514) are further configured to use a Physical Resource Block (PRB) offset of $2 \cdot RB_{\text{BWP}}^{\text{offset}}$ or use a value of $RB_{\text{BWP}}^{\text{offset}}$ as determined in the following table (table 9.2.1-1)

**3GPP TS 38.213, EXAMPLE REVISED Table 9.2.1-1**

| index | PUCCH format | First symbol | Number of symbols | PRB offset $RB_{\text{BWP}}^{\text{offset}}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3x2=6 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2x2=4 | {0, 3, 6, 9} |
| 6 | 1 | 10 | 4 | 4x2=8 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2x2=4 | {0, 3, 6, 9} |
| 10 | 1 | 4 | 10 | 4x2=8 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2x2=4 | {0, 3, 6, 9} |
| 14 | 1 | 0 | 14 | 4x2=8 | {0, 3, 6, 9} |
| 15 | 1 | 0 | 14 | $\lfloor N_{\text{BWP}}^{\text{size}}/4 \rfloor$ | {0, 3, 6, 9} |

and an offset $RB_{\text{Redcap}}$ to determine a starting PRB of a set of common PUCCH resources.

8. The apparatus of any one of claims 1 to 7, wherein the one or more processors (514) are further configured to determine a PRB index of the PUCCH transmission in a first mode as $RB_{\text{Redcap}} + 2 \cdot RB_{\text{BWP}}^{\text{offset}} + \lfloor r_{\text{PUCCH}}/N_{\text{CS}} \rfloor$ or in a second mode as $N_{\text{BWP}}^{\text{size}} - 1 - RB_{\text{Redcap}} - 2 \cdot RB_{\text{BWP}}^{\text{offset}} - \lfloor r_{\text{PUCCH}}/N_{\text{CS}} \rfloor$.

9. The apparatus of claim 8, wherein the one or more processors (514) are further configured to determine the PRB index according to the first mode when the PUCCH resource is indicated to be mapped to a lower part of an Uplink (UL) Bandwidth Part (BWP) for the PUCCH resource, and determining the PRB index according to the second mode otherwise.

10. The apparatus of any one of claims 8 to 9, wherein the one or more processors (514) are further configured to determine an initial cyclic shift index from a set of initial cyclic shift indexes as $r_{\text{PUCCH}} \bmod N_{\text{CS}}$ where $N_{\text{CS}}$ is the total number of initial cyclic shift indexes in the set of initial cyclic shift indexes.

11. The apparatus of claim 1, 2, 6, 7, or 8, wherein the one or more processors (514) are further configured to, if the PUCCH resource is indicated to be mapped to a lower part of an Uplink (UL) Bandwidth Part (BWP) for PUCCH transmission and:

   • if $\lfloor r_{\text{PUCCH}}/8 \rfloor = 0$, determine the PRB index of the PUCCH transmission as
   $$RB_{\text{Redcap}} + 2 \cdot RB_{\text{BWP}}^{\text{offset}} + \lfloor r_{\text{PUCCH}}/N_{\text{CS}} \rfloor$$
   and determine an initial cyclic shift index in the set of initial cyclic shift indexes as $r_{\text{PUCCH}} \bmod N_{\text{CS}}$; or

   • if $\lfloor r_{\text{PUCCH}}/8 \rfloor = 1$, determine the PRB index of the PUCCH transmission as
   $$RB_{\text{Redcap}} + 2 \cdot RB_{\text{BWP}}^{\text{offset}} + \Delta + \lfloor (r_{\text{PUCCH}} - 8)/N_{\text{CS}} \rfloor$$
   , and determine the initial cyclic shift index in the set of initial cyclic shift indexes as $(r_{\text{PUCCH}} - 8) \bmod N_{\text{CS}}$;

12. The apparatus of any one of claims 1, 2, 6, 7, or 8, wherein the one or more processors (514) are further configured to, if the PUCCH resource is indicated to be mapped to an upper part of an Uplink (UL) Bandwidth Part (BWP) for PUCCH transmission and

   • if $\lfloor r_{\text{PUCCH}}/8 \rfloor = 0$, determine the PRB index of the PUCCH transmission as
   $$N_{\text{BWP}}^{\text{size}} - 1 - RB_{\text{Redcap}} - 2 \cdot RB_{\text{BWP}}^{\text{offset}} - \lfloor r_{\text{PUCCH}}/N_{\text{CS}} \rfloor$$
   and determine the initial cyclic shift index in the set of initial cyclic shift indexes as $r_{\text{PUCCH}} \bmod N_{\text{CS}}$.

   • if $\lfloor r_{\text{PUCCH}}/8 \rfloor = 1$, determine the PRB index of the PUCCH transmission as
   $$N_{\text{BWP}}^{\text{size}} - 1 - RB_{\text{Redcap}} - 2 \cdot RB_{\text{BWP}}^{\text{offset}} - \Delta - \lfloor (r_{\text{PUCCH}} - 8)/N_{\text{CS}} \rfloor$$
   and determine the initial cyclic shift index in the set of initial cyclic shift indexes as $(r_{\text{PUCCH}} - 8) \bmod N_{\text{CS}}$.

13. The apparatus of claim 11 or 12, wherein the one or more processors (514) are further configured to determine an initial cyclic shift index in the set of initial cyclic shift indexes as $r_{\text{PUCCH}} \bmod N_{\text{CS}}$ where $N_{\text{CS}}$ is the total number of initial cyclic shift indexes in the set of initial cyclic shift indexes.

14. The apparatus of any one of claims 2 to 13, wherein a value range of $RB_{\text{Redcap}}$ is a subset of {0,2,3,4,6}.

15. A method of wireless communication to allocate common Physical Uplink Control Channel (PUCCH) resources for a user equipment (UE) with reduced bandwidth comprising:

   receiving a high layer configuration on parameters to determine a set of common PUCCH resources;
   decoding Downlink Control Information (DCI) from a Physical Downlink Control Channel (PDCCH) scheduling a PDSCH reception or having associated HARQ-ACK information without scheduling a PDSCH reception; and
   determining an indicated PUCCH resource in the set of PUCCH resources when frequency hopping is disabled by higher layers for the PUCCH transmission.

$RB_{RedCap}$

16 PUCCHs without frequency hopping

PRB 0 of intial BWP

Initial DL BWP

Potential other PUCCHs with frequency hopping

FIG. 1

$RB_{RedCap} + RB_{BWPoffset,1}$

$RB_{RedCap} + RB_{BWPoffset,0}$

16 PUCCHs without frequency hopping

16 PUCCHs without frequency hopping

PRB 0 of intial BWP

Initial DL BWP

Potential other PUCCHs with frequency hopping

FIG. 2

$RB_{RedCap,1} + RB_{BWPoffset,1}$

$RB_{RedCap,0} + RB_{BWPoffset,0}$

16 PUCCHs without frequency hopping

16 PUCCHs without frequency hopping

Initial DL BWP

PRB 0 of intial BWP

Potential other PUCCHs with frequency hopping

**FIG. 3**

FIG. 4

FIG. 5

FIG. 6

identifying a received indication of a higher layer configuration
701

Identifying, based on the indication of the higher layer configuration, one or more parameters related to a set of common physical uplink control channel (PUCCH) resources
702

identifying a downlink control information (DCI) received on a physical downlink control channel (PDCCH)
703

deriving, based on the DCI, an indicated PUCCH resource in the set of common PUCCH resources
704

**FIG. 7**

Europäisches Patentamt

European Patent Office

Office européen des brevets

# EUROPEAN SEARCH REPORT

Application Number

EP 23 15 8179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/247797 A1 (APPLE INC [US]) 10 December 2020 (2020-12-10) * abstract * * paragraphs [0021], [0022], [0041], [0050], [0181], [0197], [0203], [0205] * * claims 1-20 * * figures 1-10 * | 1-15 | INV. H04W72/231 |
| X | US 2021/160879 A1 (LIN QIONGJIE [US] ET AL) 27 May 2021 (2021-05-27) * abstract * * figures 1-18 * * paragraphs [0003], [0006], [0050], [0076], [0091], [0111] * * paragraph [0136] – paragraph [0137] * * paragraph [0180] – paragraph [0182] * * paragraph [0188] – paragraph [0190] * * paragraph [0279] * * claims 1-20 * | 1-15 | |

TECHNICAL FIELDS SEARCHED (IPC)

H04W

The present search report has been drawn up for all claims

| Place of search | Date of completion of the search | Examiner |
|---|---|---|
| The Hague | 12 June 2023 | Behringer, Lutz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8179

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2023

| Patent document cited in search report | Publication date | Patent family member(s) | Publication date |
|---|---|---|---|
| WO 2020247797 A1 | 10-12-2020 | CN 114175550 A<br>US 2022225428 A1<br>WO 2020247797 A1 | 11-03-2022<br>14-07-2022<br>10-12-2020 |
| US 2021160879 A1 | 27-05-2021 | EP 4046449 A1<br>US 2021160879 A1<br>WO 2021101207 A1 | 24-08-2022<br>27-05-2021<br>27-05-2021 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63313042

**Non-patent literature cited in the description**

- *3GPP TR 21.905 v16.0.0,* June 2019